# EUROPÄISCHE PATENTANMELDUNG

(11) **EP 1 190 905 A2**
(43) Veröffentlichungstag der Anmeldung: **27.03.2002**
(21) Anmeldenummer: 01113488.9
(22) Anmeldetag: 02.06.2001
(51) Int. Cl.: B60R 1/07

(54) **Stellantrieb mit integrierter Elektronik für Kraftfahrzeugspiegel**

(30) Priorität: 20.09.2000 DE 10046482
(71) Anmelder: Bühler Motor GmbH, 90459 Nürnberg (DE)
(72) Erfinder: Schieweck, Arno, 97355 Kleinlangheim (DE); Guttenberger, Richard, 91171 Greding (DE)

(57) **Zusammenfassung**

Stellantrieb für eine an einem Kraftfahrzeug einzustellende Spiegelscheibe mit einem Antriebsgehäuse (2), das gegenüber dem Kraftfahrzeug festlegbar ist und mindestens einen Elektro-Antrieb in einer Antriebs-Kammer (16) aufnimmt, und einem Träger-Element (3) für die Spiegelscheibe, wobei das Träger-Element (3) um zwei verschiedene Schwenkachsen (4, 5) gegenüber dem Antriebsgehäuse (2) verschwenkbar gelagert ist und durch den mindestens einen Elektro-Antrieb antreibbar ist, wobei das Antriebsgehäuse (2) zweiteilig unter Bildung einer Bauteil-Kammer (21) zur Aufnahme elektronischer Bauteile (22) ausgebildet ist, wobei die Bauteil-Kammer (21) von der Antriebs-Kammer (16) getrennt ist.

## Beschreibung

Die Erfindung betrifft einen Stellantrieb gemäß den Oberbegriff des Anspruches 1.

Stellantriebe für Kraftfahrzeugspiegel sind seit langem bekannt. Diese bestehen in der Regel aus einem gegenüber dem Kraftfahrzeug festlegbaren Antriebsgehäuse und einer gegenüber dem Antriebsgehäuse angetrieben verschwenkbaren Trägerplatte für die Spiegelscheibe. Die Verschwenkung der Trägerplatte erfolgt durch Elektromotoren, die in dem Antriebsgehäuse angeordnet sind. Da die Kraftfahrzeugspiegel insgesamt ein möglichst geringes Außenvolumen einnehmen sollen, muß die Anordnung von Antriebsgehäuse und Trägerplatte möglichst kompakt sein. Bei einer aus der WO 98/31565 bekannten Ausführungsform ist die Trägerplatte durch eine mittig durch das Antriebsgehäuse verlaufende Schraube derart festgelegt, daß die Trägerplatte um zwei senkrecht zueinander verlaufende Schwenkachsen verschwenkbar ist. Durch die mittig durch das Antriebsgehäuse verlaufende Schraube wird der Innenraum des Antriebsgehäuses jedoch derart durchtrennt, daß es im wesentlichen unmöglich ist, elektronische Bauteile zusätzlich in das Antriebsgehäuse zu integrieren.

Der Erfindung liegt die Aufgabe zugrunde, einen Stellantrieb für eine an einem Kraftfahrzeug einzustellende Spiegelscheibe zu schaffen, bei der elektronische Bauteile möglichst volumensparend integriert sind.

Die Aufgabe wird durch die Merkmale des kennzeichnenden Teils des Anspruches 1 gelöst. Der Kern der Erfindung besteht darin, das Antriebsgehäuse zweiteilig auszubilden, wobei der Elektro-Antrieb in einem Antriebsgehäuseteil und die elektronischen Bauteile in dem anderen Antriebsgehäuseteil untergebracht sind. Die beiden Antriebsgehäuseteile bilden zusammen das Antriebsgehäuse. Durch eine Minimierung des Raumes für den Elektro-Antrieb kann ein Raum für elektronische Bauteile geschaffen werden.

Weitere vorteilhafte Ausgestaltungen der Erfindung ergeben sich aus den Unteransprüchen.

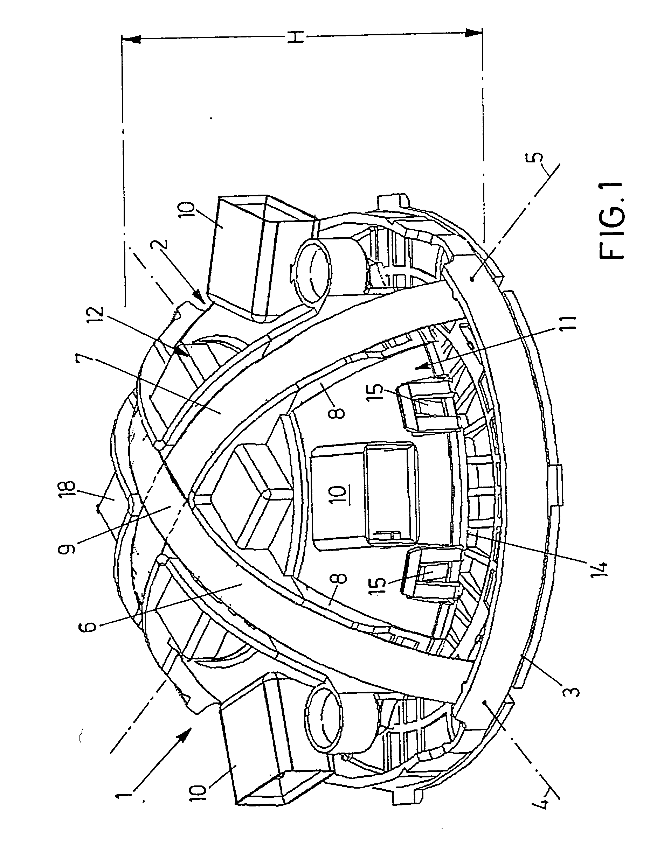

Zusätzliche Merkmale und Einzelheiten der Erfindung ergeben sich aus der Beschreibung eines Ausführungsbeispiels anhand der Zeichnung. Es zeigen
- Fig. 1: eine Draufsicht auf einen Stellantrieb mit Trägerplatte und Antriebsgehäuse und

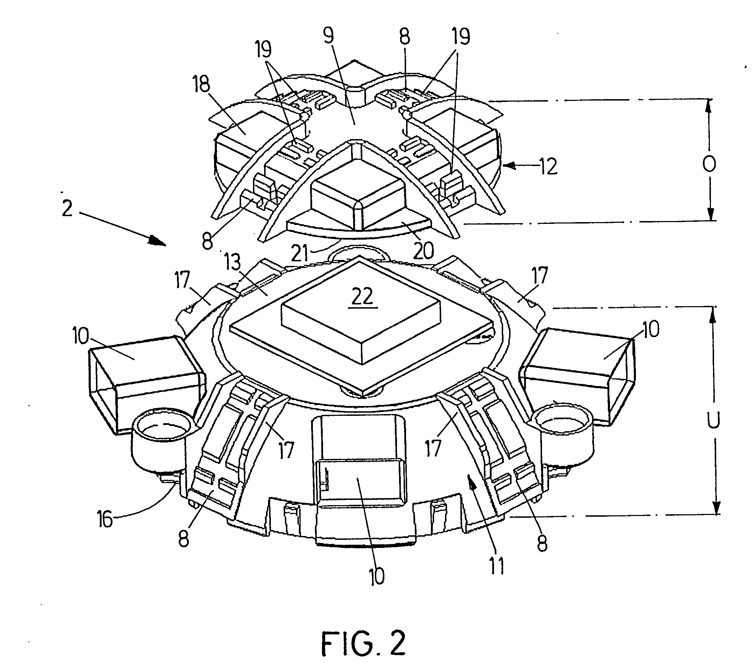

- Fig. 2: eine Explosionsdarstellung des Antriebsgehäuses.

Ein Stellantrieb 1 für eine an einem Kraftfahrzeug einzustellende Spiegelscheibe weist ein im wesentlichen kugelkalottenförmiges Antriebsgehäuse 2 auf, das gegenüber dem Kraftfahrzeug festlegbar ist. Eine als Träger-Element ausgebildete Trägerplatte 3 für die Spiegelscheibe ist um zwei senkrecht zueinander verlaufende Schwenkachsen 4 und 5 gegenüber dem Antriebsgehäuse 2 verschwenkbar. Zwei aus Metall bestehende Verstellbänder 6 und 7 sind an ihren jeweiligen Enden an gegenüberliegenden Randpunkten der Trägerplatte 3 festgelegt und verlaufen senkrecht zueinander. Die Verstellbänder 6 und 7 sind in nach außen offenen Führungsschienen 8, die auf Meridianen auf dem Antriebsgehäuse 2 verlaufen, verschiebbar geführt und kreuzen einander unter 90° am oberen Mittelpunkt 9 des Antriebsgehäuses 2. In dem Antriebsgehäuse 2 sind zwei Elektromotoren mit nachgeordneten Getrieben vorgesehen, die durch unter den Verstellbändern 6 und 7 liegende Öffnungen in dem Antriebsgehäuse 2 mit den Verstellbändern 6 und 7, die in diesem Bereich eine Zahnleiste aufweisen, in Eingriff sind. Durch eine Betätigung der Elektromotoren können die Verstellbänder 6 und 7 relativ zu dem Antriebsgehäuse 2 und damit die Trägerplatte 3 relativ zu dem Antriebsgehäuse 2 um die Schwenkachsen 4 und 5 verschwenkt werden. Die elektrische Versorgung und die Ansteuerung der Elektromotoren erfolgt über an dem Antriebsgehäuse 2 angeordnete Steckbuchsen 10. Der Grundaufbau des Stellantriebs 1 sowie insbesondere die Lagerung der Trägerplatte 3 gegenüber dem Antriebsgehäuse 2 ist aus der DE 199 19 529 A1 bekannt, auf die hiermit ausdrücklich verwiesen wird.

Im folgenden wird der Aufbau des Antriebsgehäuses 2 genauer beschrieben. Das kugelkalottenförmige Antriebsgehäuse 2 besteht aus einem unteren Gehäuseteil 11 sowie einem darauf angeordneten oberen Gehäuseteil 12. Das Gehäuseteil 11 weist im wesentlichen die Form einer Kugelschicht auf, d.h. die Form eines Körpers, der sich daraus ergibt, daß bei einer Kugel durch zwei parallel zueinander verlaufende Schnitte eine Schicht herausgetrennt wird. Das obere Gehäuseteil 12 weist die Form eines Kugelabschnittes auf, wobei das untere Gehäuseteil 11 und das darauf angeordnete obere Gehäuseteil 12 zusammen das kugelkalottenförmige Antriebsgehäuse 2 bilden. Das Gehäuseteil 11 weist auf der dem Gehäuseteil 12 zugewandten Seite einen im wesentlichen ebenen Boden 13 auf. Auf der der Trägerplatte 3 zugewandten Seite ist das Gehäuseteil 11 durch einen Deckel 14, der über Rastarme 15 mit dem Gehäuseteil 11 verrastet ist, verschlossen. Von dem Gehäuseteil 11 wird eine Antriebs-Kammer 16 umschlossen, in der die Elektromotoren und die zugehörigen Getriebe vorgesehen sind. Die Höhe U senkrecht zu der durch die Schwenkachsen 4 und 5 aufgespannten Ebene ist so gewählt, daß die Elektromotoren und die Getriebe gerade ausreichend Platz in der Antriebs-Kammer 16 haben. Auf dem Gehäuseteil 11 sind untere Abschnitte 17 der Führungsschienen 8 vorgesehen.

Das obere Gehäuseteil 12 weist einen im wesentlichen quaderförmigen, in Richtung auf das Gehäuseteil 11 einseitig offenen Bauteil-Kammer-Deckel 18 auf, auf dem obere Abschnitte 19 der Führungsschienen 8 angeordnet sind. Die Abschnitte 17 und 18 bilden zusammen die Führungsschienen 8. An der dem Gehäuseteil 11 zugewandten Seite des Deckels 18 weist dieser eine den Deckel 18 ringähnlich umschließende runde Bodenplatte 20 auf, deren Durchmesser dem des kreisförmigen Bodens 13 entspricht und die parallel zu diesem verläuft. Durch den Boden 13 und den Deckel 18 wird eine quaderförmige Bauteil-Kammer 21 begrenzt. Die Bauteil-Kammer 21 kann auch eine andere Form aufweisen, z.B. kalottenförmig oder rund sein. In der Bauteil-Kammer 21 sind ein oder mehrere elektronische Bauteile 22 angeordnet und allseitig schützend umschlossen. Das Bauteil 22 ist über elektrische Leitungen, die durch den Boden 13 zur Antriebs-Kammer 16 verlaufen, mit den Elektromotoren verbunden. Es ist möglich, die Bodenplatte 20 mit dem Boden 13 zu verkleben, zu verrasten oder zu verschweißen. Es ist möglich, eine wasserdichte Verbindung zu schaffen. Die beiden Gehäuseteile 11 und 12 können in einer besonders vorteilhaften Weise jedoch auch alleine durch die Verstellbänder 6 und 7, die gegenüber dem Antriebsgehäuse 2 leicht vorgespannt sind, zusammengehalten werden. Die Höhe O des Gehäuseteiles 12 ist derart gewählt, daß sie mit der Höhe U des Gehäuseteils 11 die Höhe H des kugelkalottenförmigen Antriebsgehäuses 2 ergibt. Dies bedeutet, daß die Höhe O um so größer gewählt werden kann und damit das Volumen der Bauteilkammer 21 um so größer gewählt werden kann, je kleiner die Höhe U gewählt wird. Die Höhe U ist bei einer optimalen Ausnutzung der Antriebs-Kammer 16 für die Elektromotoren und die Getriebe am geringsten.

Durch die Schaffung einer Bauteil-Kammer 21 oberhalb der Antriebs-Kammer 16 ist es möglich, die elektronischen Bauteile vor Umwelteinflüssen, vor allem Feuchtigkeit, geschützt und platzsparend in das Antriebsgehäuse 2 zu integrieren. Durch das Bauteil 22 ist es möglich, daß der Stellantrieb 1 insgesamt sehr viel komplexere Aufgaben, wie z.B. eine automatische Grundeinstellung des Spiegels für verschiedene Benutzer des Kraftfahrzeuges, automatisch durchführt. Es ist ferner möglich, eine Ansteuer-Schaltung mit Bus-Empfänger unterzubringen. Ferner ist es möglich, weitere Spiegelfunktionen, wie z.B. einen Blinker, Umfeldbeleuchtung oder Spiegelheizung zu integrieren. Die gesamte Größe des Antriebsgehäuses 2, die nach außen durch die Verstellbänder 6 und 7 begrenzt wird, wird durch die Schaffung der Bauteil-Kammer 21 unwesentlich vergrößert.

## Patentansprüche

1. Stellantrieb für eine an einem Kraftfahrzeug einzustellende Spiegelscheibe mit
a) einem Antriebsgehäuse (2), das
i) gegenüber dem Kraftfahrzeug festlegbar ist und
ii) mindestens einen Elektro-Antrieb in einer Antriebs-Kammer (16) aufnimmt, und
b) einem Träger-Element (3) für die Spiegelscheibe, wobei das Träger-Element (3)
i) um zwei verschiedene Schwenkachsen (4, 5) gegenüber dem Antriebsgehäuse (2) verschwenkbar gelagert ist und
ii) durch den mindestens einen Elektro-Antrieb antreibbar ist, **dadurch gekennzeichnet, daß**
c) das Antriebsgehäuse (2) zweiteilig unter Bildung einer Bauteil-Kammer (21) zur Aufnahme elektronischer Bauteile (22) ausgebildet ist,
d) wobei die Bauteil-Kammer (21) von der Antriebs-Kammer (16) getrennt ist.

2. Stellantrieb gemäß Anspruch 1, **dadurch gekennzeichnet, daß** das Antriebsgehäuse (2) im wesentlichen kugelkalottenförmig ausgebildet ist.

3. Stellantrieb gemäß Anspruch 2, **dadurch gekennzeichnet, daß** zur Verschwenkung des Träger-Elementes (3) gegenüber dem Antriebsgehäuse (2) zwei Verstellbänder (6, 7) vorgesehen sind, die gegenüber dem Träger-Element (3) festgelegt sind und auf dem Antriebsgehäuse (2) verschiebbar geführt sind.

4. Stellantrieb gemäß Anspruch 3, **dadurch gekennzeichnet, daß** die Verstellbänder (6, 7) im wesentlichen senkrecht zueinander verlaufen.

5. Stellantrieb gemäß Anspruch 3 oder 4, **dadurch gekennzeichnet, daß** die Antriebs-Kammer (15) und die Bauteil-Kammer (21) von den Verstellbändern (6, 7) umgriffen werden.

6. Stellantrieb gemäß einem der Ansprüche 3 bis 5, **dadurch gekennzeichnet, daß** das Antriebsgehäuse (2) aus einem ersten Antriebsgehäuseteil (11) mit der Antriebs-Kammer (16) und einem zweiten Antriebsgehäuseteil (12) mit der Bauteil-Kammer (21) besteht.

7. Stellantrieb gemäß Anspruch 6, **dadurch gekennzeichnet, daß** das erste Antriebsgehäuseteil (11) im wesentlichen kugelschichtförmig ausgebildet ist.

8. Stellantrieb gemäß Anspruch 6 oder 7, **dadurch gekennzeichnet, daß** das zweite Antriebsgehäuseteil (12) kugelkalottenförmig ausgebildet ist.

9. Stellantrieb gemäß einem der vorangehenden Ansprüche, **dadurch gekennzeichnet, daß** die Bauteil-Kammer (21) im wesentlichen quaderförmig ist.

10. Stellantrieb gemäß Anspruch 7, **dadurch gekennzeichnet, daß** das erste Antriebsgehäuseteil (11) auf der dem Träger-Element (3) abgewandten Seite einen Boden (13) aufweist, der die Bauteil-Kammer (21) in einer Richtung begrenzt.
